# EUROPEAN PATENT SPECIFICATION

(11) **EP 0 697 970 B1**
(45) Date of publication and mention of the grant of the patent: **11.03.1998**
(21) Application number: 94916448.7
(22) Date of filing: 03.05.1994
(51) Int. Cl.: B60R 21/26

(54) **MEANS FOR FILLING AN AIRBAG**
VORRICHTUNG ZUR FÜLLUNG EINES AIRBAGS
DISPOSITIF DE REMPLISSAGE D'UN SAC GONFLABLE

(30) Priority: 19.05.1993 SE 9301730
(43) Date of publication of application: 28.02.1996
(73) Proprietor: AGA AKTIEBOLAG, 181 81 Lidingö (SE)
(72) Inventor: SVENSSON, Orvar, S-183 39 Täby (SE)
(74) Representative: Wiedemann, Bernd
(86) International application number: SE9400398
(87) International publication number: WO9426562

(56) References cited:
- DE-A- 2 501 602
- DE-A- 4 231 356

## Description

The present invention relates to an arrangement for filling an empty, flexible container with gas essentially instantaneously when the speed of a vehicle in which the container is fitted is greatly retarded, therewith to prevent injury to persons present in the vehicle or to reduce the extent of injury thereto, in the event of a collision for instance.

Certain automobiles are fitted with so-called airbags as an alternative to or as a supplement to safety belts and safety harnesses. These bags are inflated very rapidly in front of the driver or passengers, so as to protect them against injury that might otherwise be caused by the driver or passenger being thrown against the steering wheel or the instrument panel (dashboard).

Hitherto airbags have not been fitted for rear seat passengers. This is possibly because much larger bags would be required in the rear passenger seat, probably due to problems relating purely to gas kinetics.

In the case of a head-on collision or any other form of collision which causes the vehicle to be brought to an abrupt stop, it is imperative that the container is inflated with gas to form a gas bag before the person concerned strikes the back of the front seat or the steering wheel and/or the instrument panel, this person continuing to move in the vehicle at the speed at which the vehicle was travelling at the time the collision.

It is estimated that the bag must be inflated within the space of 1/100th of a second in order to provide adequate protection.

If it is assumed that a vehicle is moving at a speed of 110 km/h at the moment of a collision, a person seated in the vehicle will be moved about 0.3 m in relation to the ground in this time. Since the actual body of the vehicle will not stop instantaneously, due to the front of the vehicle buckling one or more decimeters, the driver of the vehicle or a vehicle passenger will move forwards in the vehicle through a distance of perhaps one or two decimeters, in relation to the vehicle body, in the time span of 0.01 seconds, meaning that the airbag must inflate and prevent the driver or the passenger from striking the steering wheel or the instrument panel or the backrest of a front seat before this time span expires.

When a gas expands, in this case without the exchange of energy (isoenthalpically), the temperature will normally fall as a result of the so-called Joule-Thomson-effect.

The temperature will fall by about 70-100 degrees in the case of air or nitrogen, which is allowed to expand from 400 to 2 bars. Consequently, when the airbag inflating gas is stored in a high pressure container, it is necessary either to supply corresponding heat to the gas in order to achieve the volume that the gas would otherwise have at room temperature, or the pressure container must be filled with about 30% more gas.

In addition to this lowering of the temperature, it must be borne in mind that air, nitrogen or other gases have a compressibility factor of about 1.2 at 400 bars, which must be taken into account when dimensioning the container, since either the pressure or the volume must be increased to a corresponding degree in comparison with what would have been the case for an ideal gas.

Another problem associated with all heavy gases is that, in the present context, the outflowing gas would have a relatively low velocity, since the gas exiting velocity is a function of both molecular weight and temperature.

Arrangements for filling an empty, flexible container with gas essentially instantaneously upon the occurrence of powerful retardation forces are known. DE-A1-42 31 356 teaches an arrangement including two high-pressure, gas-filled vessels, a combustion chamber in flow communication with a flexible container. Each of said pressure vessel is closed by a respective closure means. One pressure vessel is filled with oxygen and an inert gas and the other vessel is filled with hydrogen. Both pressure vessels have their outlet in communication with a combustion chamber.

A suitable igniter is associated with the combustion chamber. The igniter, when actuated, ignites the mixture of gases in the combustion chamber to increase the pressure. The hot gas is directed from the combustion chamber through an outlet conduit into the flexible container.

An object of the present invention is to improve the system described in prior art by providing an arrangement for filling an empty flexible container with gas essentially instantaneously when an automobile in which the container is fitted is subjected to powerful retardation forces, wherein the gas-inflated container functions as an injury-reducing, force-absorbing bag, and wherein the arrangement according to the preamble of the main claim includes two high-pressure, gas-filled vessels, each of which is closed by a respective closure means and will be in fluid communication with the flexible container immediately after opening of the closure means, one of said pressure vessels is filled with oxygen and an inert gas and the other pressure vessel is filled with hydrogen, an opening device for opening communication between the vessels and the container in the event of retardation forces that exceed a smallest value, and a retardation meter.

This object is achieved in accordance with the invention with an arrangement that has the characteristic features set forth in the following main claim. Advantageous embodiments of the inventive arrangement will be apparent from the depending claims.

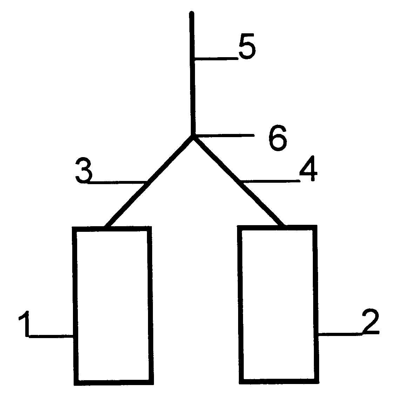

The invention will now be described in more detail with reference to the accompanying drawing, the single Figure of which illustrates two gas containers that are connected to a conduit in connection with the empty gas bag.

The drawing illustrates a main conduit 5 extending to an unfilled gas bag, not shown. That end of the main conduit which lies distal from the gas bag branches into two connection conduits 3 and 4, via a branch 6. Each of the branch conduits 3 and 4 is connected to a respective compressed-gas container 1 and 2. The gas containers are closed by means of explosion-activated burster plates which open simultaneously when the vehicle is retarded powerfully to a sufficient extent (collision). The containers 1 and 2 contain together the requisite volume of gas.

The first container 1 is filled with helium and at most 50% by volume of another inert gas, for instance argon and/or nitrogen. The container 1 also contains oxygen. The amount of oxygen present is between 2.5 and 20% by volume of the total volume of gas in the containers 1 and 2. The second container 2 is also filled with helium and at most 50% by volume of another inert gas, for instance argon and/or nitrogen, and also contains hydrogen in an amount corresponding to 3-15% by volume of the total gas volume in the containers 1 and 2. The containers 1 and 2 will preferably contain mutually the same inert gas or gas mixture. The inert gas most preferred is helium, which preferably constitutes at least almost all of the inert gas present.

In the event of powerful retardation, causing the burster plates on both containers 1 and 2 to burst, the gas contained in the two containers will flow into the main conduit 5. The explosion generated to burst the burster plates will ignite the oxygen-hydrogen mixture resulting in a chemical reaction to form water. As a result of this reaction, the temperature will be raised considerably, therewith adequately compensating for the cooling effect caused by the free expansion of nitrogen and argon. This also enables the volume of gas required to fill the airbag to be reduced.

Because it is not possible to store an oxygen-hydrogen-mixture in one and the same container for safety reasons, these gases are held mutually separated in separate containers which are opened simultaneously and the gases therewith combine before they reach the airbag.

It is extremely important that the pressurized containers used for filling collision-activated airbags do not leak and will remain under the necessary pressure for many years after being filled. Since highly sensitive helium leakage detectors are available, it is convenient to use helium as a constituent of the gas used.

## Claims

1. An arrangement for filling an empty, flexible container with gas essentially instantaneously upon the occurrence of powerful retardation forces, wherein the gas-filled container forms an injury-reducing, force-absorbing bag, and wherein the arrangement includes two high-pressure, gas-filled vessels (1, 2), each of which is closed by a respective closure means and will be in fluid communication with the flexible container immediately after opening of the closure means, one of said pressure vessels (1, 2) is filled with oxygen and an inert gas and the other pressure vessel (2, 1) is filled with hydrogen, an opening device for opening communication between the vessels (1, 2) and the container in the event of retardation forces that exceed a smallest value, and a retardation meter, **characterized** in that each of said pressure vessels (1, 2) is connected to a conduit (3, 4) merging in a common conduit (5), said common conduit being in fluid communication with the flexible container, there being no intermediate combustion chamber between said common conduit and said flexible container, and in that the other of said pressure vessels (2, 1) is filled with hydrogen and said inert gas, wherein the inert gas includes helium and at most 50% by volume argon and/or nitrogen.

2. An arrangement according to Claim 1, **characterized** in that the amount of hydrogen present corresponds to 3-15% by volume of the total volume of gas contained in the two vessels.

3. An arrangement according to Claim 1 or 2, **characterized** in that the volume of oxygen present corresponds to 2.5-20% by volume of the total volume of gas present in the two vessels.

4. An arrangement according to one or more of the preceding claims, **characterized** in that the pressure vessels have mutually the same volume.

5. An arrangement according to one or more of the preceding claims, **characterized** in that the inert gas is helium.

## Patentansprüche

1. Anordnung zum im wesentlichen sofortigen Befüllen eines leeren, flexiblen Behälters mit Gas beim Auftreten starker Verzögerungskräfte, wobei der gasgefüllte Behälter einen Verletzungen verringernden kraftabsorbierenden Sack bildet und wobei die Anordnung zwei gasgefüllte Hochdruckgefäße (1, 2), von denen jedes durch ein entsprechendes Verschlußmittel geschlossen ist und in Fluidverbindung mit dem flexiblen Behälter unmittelbar nach Öffnen der Verschlußmittel sein wird, wobei eines der Druckgefäße (1, 2) mit Sauerstoff und einem inerten Gas und das andere Druckgefäß (2, 1) mit Wasserstoff gefüllt ist, eine Öffnungseinrichtung zum Öffnen der Verbindung zwischen den Gefäßen (1, 2) und dem Behälter im Falle von Verzögerungskräften, die einen kleinsten Wert überschreiten, und eine Verzögerungsmeßeinrichtung einschließt, dadurch gekennzeichnet, daß jedes der Druckgefäße (1, 2) mit einer Leitung (3, 4) verbunden ist, die in eine gemeinsame Leitung (5) münden, wobei die gemeinsame Leitung in Fluidverbindung mit dem flexiblen Behälter ist, wobei keine dazwischen angeordnete Verbrennungskammer zwischen der gemeinsamen Leitung und dem flexiblen Behälter vorhanden ist, und daß das andere der Druckgefäße (2, 1) mit Wasserstoff und dem inerten Gas gefüllt ist, wobei das inerte Gas Helium und höchstens 50 Vol.-% Argon und/oder Stickstoff einschließt.

2. Anordnung nach Anspruch 1, dadurch gekennzeichnet, daß die Menge des vorhandenen Wasserstoffs 3 - 15 Vol.-% des gesamten Volumens des Gases entspricht, das in den beiden Gefäßen enthalten ist.

3. Anordnung nach Anspruch 1 oder 2, dadurch gekennzeichnet, daß das Volumen des vorhandenen Sauerstoffs 2,5 bis 20 Vol.-% des gesamten Volumens von Gas entspricht, das in den beiden Gefäßen vorhanden ist.

4. Anordnung nach einem oder mehreren der vorangehenden Ansprüche, dadurch gekennzeichnet, daß die Druckgefäße dasselbe Volumen aufweisen.

5. Anordnung nach einem oder mehreren der vorangehenden Ansprüche, dadurch gekennzeichnet, daß das inerte Gas Helium ist.

## Revendications

1. Agencement pour remplir de gaz un conteneur souple, vide, pratiquement instantanément lors de l'apparition de forces de ralentissement importantes, dans lequel le conteneur rempli de gaz forme un coussin d'absorption des forces, de réduction des blessures, et dans lequel l'agencement comporte deux récipients remplis de gaz a haute-pression (1, 2), dont chacun est fermé par des moyens de fermeture respectifs et sera en communication de fluide avec le conteneur souple immédiatement après l'ouverture des moyens de fermeture, un desdits récipients sous pression (1, 2) étant rempli d'oxygène et d'un gaz inerte et l'autre récipient sous pression (2, 1) étant rempli d'hydrogène, un dispositif d'ouverture pour ouvrir la communication entre les récipients (1, 2) et le conteneur dans l'éventualité de forces de ralentissement qui dépassent une valeur la plus faible, et un compteur de ralentissement, caractérisé en ce que chacun desdits récipients sous pression (1, 2) est relié à un conduit (3,4) se regroupant en un conduit commun (5), ledit conduit commun étant en communication de fluide avec le conteneur souple, aucune chambre de combustion intermédiaire n'existant entre ledit conduit commun et ledit conteneur souple, et en ce que l'autre desdits récipients sous pression (2, 1) est rempli d'hydrogène et dudit gaz inerte, ledit gaz inerte comportant de l'hélium et au plus 50 % en volume d'argon et/ou d'azote.

2. Agencement selon la revendication 1, caractérisé en ce que la quantité d'hydrogène présente est entre 3 et 15 % en volume du volume total de gaz contenu dans les deux récipients.

3. Agencement selon la revendication 1 ou 2, caractérisé en ce que le volume d'oxygène présent est entre 2,5 et 20 % en volume du volume total de gaz contenu dans les deux récipients.

4. Agencement selon l'une quelconque des revendications précédentes, caractérisé en ce que les récipients sous pression ont mutuellement le même volume.

5. Agencement selon l'une quelconque des revendications précédentes, caractérisé en ce que le gaz inerte est de l'hélium.
